# EUROPÄISCHE PATENTSCHRIFT

(11) **EP 1 292 809 B1**
(45) Veröffentlichungstag und Bekanntmachung des Hinweises auf die Patenterteilung: **17.03.2004**
(21) Anmeldenummer: 01984040.4
(22) Anmeldetag: 16.06.2001
(51) Int. Cl.: G01L 1/00

(54) **SENSOR ZUR DEHNUNGS- UND SPANNUNGSAUFNAHME IN FESTEN MATERIALIEN**
SENSOR FOR RECORDING EXTENSION AND STRESS IN SOLID MATERIALS
CAPTEUR POUR MESURER L'ALLONGEMENT ET LES CONTRAINTES DANS DES MATERIAUX SOLIDES

(30) Priorität: 19.06.2000 DE 10030099
(43) Veröffentlichungstag der Anmeldung: 19.03.2003
(73) Patentinhaber: BRD, vertr. durch das BM für Wirtschaft und Arbeit, dieses vertr. durch den Präs. der Physikalisch-Technischen Bundesanstalt, 38116 Braunschweig (DE)
(72) Erfinder: TEGTMEIER, Falk, 38116 Braunschweig (DE); PETERS, Manfred, 38302 Wolfenbüttel (DE)
(74) Vertreter: Lins, Edgar, Dipl.-Phys. Dr.jur.
(86) Internationale Anmeldenummer: PCT/DE2001/002239
(87) Internationale Veröffentlichungsnummer: WO 2001/098742

(56) Entgegenhaltungen:
- EP-A- 0 344 496
- EP-A- 0 429 399
- US-A- 4 542 655

## Beschreibung

### Anwendungsgebiet

Die Erfindung betrifft einen Sensor zur Aufnahme von mehrkomponentigen Spannungs- und Dehnungszuständen in festen Materialien, der in eine Bohrung in das Material eingebracht wird und dort die von den umgebenden Spannungszuständen hervorgerufenen elastischen Deformationen messen kann. Die Erfindung kann u. a. im Bereich des Bauwesens eingesetzt werden, wo es zum Zwecke der optimalen Bauwerkserhaltung und Überwachung notwendig ist, anhand von exakten und langfristigen Messungen die Belastung in einzelnen Segmenten zu überprüfen.

### Stand der Technik

a) ist die Messung von ebenen Spannungszuständen in Festkörpern, die durch direkte Applikation von Dehnungsmessstreifen auf das Material erfolgt. Aufgrund der chemischen Sensibilität der Verklebung zwischen Material und Messstreifen ist diese Vorrichtung nur zeitlich begrenzt nutzbar. Zudem ist die direkte Applikation von Dehnungsmessstreifen durch die Notwendigkeit eines hochreinen Zustandes des Applikationsortes unter bautechnischer Umgebung nur durch aufwendige Vorbehandlungen zu erreichen.
b) sind einzelne Dehnungsmessstreifen, die auf einer rostfreien Stahlplatte aufgeklebt und auf ein Bauwerk aufgeschweißt werden. Eine Einbringung in das Bauwerk ist bei dieser Konstruktion nicht möglich. Es können nur ebene Spannungszustände gemessen werden. Durch Einflüsse des Schweißvorgangs und durch die Abhängigkeit der Schweißpunkte von äußeren Bedingungen kann es zu fehlerhaften Messungen kommen.
c) ist die Messung von Kräften durch einen Sensor, der als übermaßiger Ring mit einer feinen Außenrändelung in eine Bohrung eingepresst wird. Kennzeichnend für diesen Sensortyp ist, dass der Messbereich durch die Forderung einer über den gesamten Kontaktumfang gleitungsfreien Kraftübertragung beschränkt ist. Die Grenze wird durch eine materialbedingte endliche Anpresskraft und den Reibkoeffizienten gesetzt. So wird in der Praxis eine Dehnungsgrenze von unter 0,02 % für den Messbereich genannt. Diese Dehnungsgrenze wird erfahrungsgemäß an für die Überwachung interessanten Punkten in Bauwerken kontinuierlich überschritten. Der Sensor benötigt eine hohe Präzision der Bohrung bezüglich der Toleranzen und muss äußerst präzise eingepresst werden. Einen Einsatz findet dieser Sensortyp daher nur bei Anwendungen mit geringen Lastgrenzen, wie Füllstandsmessungen. Zudem darf der Bereich nur die oben genannten geringen Dehnungswerte aufweisen. Um dies zu gewährleisten, ist eine vorherige Analyse der Spannungszustände notwendig, damit keine Fehlmessungen durch verschiedene Komponenten verursacht werden.

Es wird des weiteren auf die US4542655 verwiesen die ein Bohrlochspannungsmesser mit einem konischen mit Messelementen bestücktem Innenteil aufweist, das gegen ein ebenfalls konischem hohlem Aussenteil verspannt wird.

In der EP0344496 wird eine Halterung für einen scheibenförmigen Dehnungsgeber beschrieben bei dem der Aussenmantel des Halters gewölbte Kontaktflächen aufweist.

### Aufgabe

Entwicklung eines Sensors, der eine reproduzierbare Aufnahme der Spannungszustände über den gesamten elastischen Deformationsbereich von bautypischen Materialien, insbesondere Stahl, Beton und Gesteine ermöglicht. Die Ausweitung des Messbereiches über sämtliche im Baubereich vorkommenden elastischen Dehnungsgrößen ist bei hochausgenutzten Strukturen einer rationellen Baukonstruktion unumgänglich. Damit soll eine Bauwerksüberwachung ermöglicht werden, die Schäden in einem Frühstadium erkennt und in diesem Zustand noch kostengünstige Gegenmaßnahmen zur Strukturerhaltung zulässt.

### Lösung

Diese **Aufgabe wird erfindungsgemäß dadurch gelöst,**
a) dass ein in der Längsanordnung konischer Dehnungsübertragungskörper, hier als Innenteil 2 bezeichnet, in einen gleichartig konischen Verformungskörper, hier als Außenteil 1 bezeichnet, durch eine Anzugskraft verspannt wird,
b) dass das Außenteil 1 mehrfach in axialer Richtung abwechselnd von der Vorder- und Rückseite geschlitzt wird,
c) dass das Außenteil 1 mindestens dreieckig ausgeführt ist und die Bohrung des Messobjektes dadurch nur mit axialen linienartigen Kontaktstegen berührt
d) und dass das Innenteil 2 mit Messaufnehmern 3 bestückt wird.

### Offenbarung

Der Sensor ist zusammengesetzt aus Außen- 1 und Innenteil 2. Die Kontaktfläche von Innen- und Außenteil 1, 2 ist in der Längsanordnung konisch geformt. Über eine beliebige Krafteinleitung, z. B. durch Anzugschrauben oder hydraulische Pressen, wird das Innenteil 2 in das Außenteil 1 gepresst. Der Konuswinkel sollte vorzugsweise unter 4,5 Grad liegen, damit sich der Sensor selbsthemmend verspannt.

Um die Anforderungen an die Toleranz der Bohrung gering zu halten, ist das Außenteil 1 in Bohrungsrichtung von vorne und hinten abwechselnd geschlitzt, so dass es sich in seinem Umfang wie ein Federelement dehnen kann und sich durch das konische Innenteil 2 dem Bohrungsdurchmesser anpasst.

Die in Bohrungsrichtung ausgerichteten Außenflächen des Außenteiles 1 werden als Vieleck mindestens dreieckig ausgebildet, so dass sie die Bohrungsinnenfläche eines zu messenden Objektes nur mit endlich breiten Linien kontaktieren.

Das Innenteil 2 wird entweder eckig oder rund ausgeführt. Auch in einer eckigen Bauform wird das Innenteil 2 in seiner zur Bohrungsachse tangentialen Richtung nicht vollständig als Vieleck ausgebildet. Die Ausführung des Kontaktbereiches zum Außenteil 1 als Fläche statt als Linie ist notwendig, um die torsionsempfindlichen Kontaktzungen des Außenteiles 1 zu stabilisieren, also um den Zustand eines statisch unterbestimmten Systems für diese Segmente zu vermeiden. Das Innenteil 2 ist so in das Außenteil 1 einzubringen, dass die Eckpunkte von Innen- und Außenteil auf den gleichen Winkellinien um den Bohrungsmittelpunkt liegen. Bei einer runden Gestaltung des Innenteiles 2 ist die begrenzte Kontaktfläche zum innen runden, konisch zulaufenden Außenteil 1 vorzugsweise durch eine entsprechend breite Schlitzung des Außenteiles 1 zu erzeugen. In beiden Fällen wird auf die zum Außenteil 1 kontaktfreien Flächen des Innenteiles 2 die Dehnung transferiert. Sie wird also zwischen den Außenkontakten über den Winkel um den Bohrungsmittelpunkt des Sensors integriert und in der elastischen Deformation dieser Fläche des Innenteiles 2 dargestellt. Dort wird sie mit beliebigen Messmethoden, z. B. Dehnungsmessstreifen 3, beschrieben.

Für die Messung der auf den Innenumfang des Innenteiles 2 transferierten Dehnungen kommen alle möglichen Beschreibungsformen zur Dehnungsmessung in Betracht. Die Innenbohrung kann auch mit weiteren Konstruktionen, wie z.B. raumdurchschneidenden Zugstäben oder Membranen messtechnisch genutzt werden. Denkbar ist auch der Einsatz von berührungslosen Messaufnehmern.

Im Interesse der Messgenauigkeit ist darauf zu achten, dass die Querverbindungen zwischen den in Bohrungsrichtung ausgerichteten, durch die Schlitzung entstandenen Segmenten des Außenteiles 1 nicht mit dem messtechnisch relevanten Bereich des Innenteiles 2 kontaktieren. Dies kann z. B. durch ein geeignetes Freidrehen der konischen Innenbohrung im Außenteil 1 erreicht werden.

Die linienartigen Kontaktstege des eckigen Sensors können durch geeignete Aussparungen mittig unterbrochen werden, so dass die Kontaktbereiche nur noch angenähert punktförmig, vorrangig an den Außenrändern der Bohrung bestehen bleiben. Damit ist der Sensor in der Lage, auch Lastkomponenten außerhalb der eigentlichen Lastebene senkrecht auf der Bohrungsachse aufzunehmen.

Der Sensor kann aus verschiedenen Materialien gebaut werden. Diese können dem Messobjekt 4 angepasst werden, z. B. weiche Materialien für Kunststoffe oder Holz, Stahl für Beton und Metalle. Beispielhaft könnte für einen sehr hohen Messbereich Titan eingesetzt werden.

### Bevorzugte Ausführungsform

Der erfindungsgemäße Sensor eignet sich insbesondere für die Aufnahme der Spannungsmatrix in einer Bauwerksumgebung. Für diesen Einsatzzweck in Beton und Stahl ist eine Ausführung aus Edelstahl aufgrund der elastischen Eigenschaften und der Korrosionsbeständigkeit geeignet. In der Praxis erweist sich eine Außenverspannung mit vier Zugschrauben als vorteilhaft und einfach zu handhaben. Um eine Aussage über einen in der Bautechnik vorkommenden ebenen Lastfall mit Zug- und Schubkomponenten zu erhalten, ist eine achteckige Ausführung am geeignetsten, um einzelne Messsignale den Lastkomponenten zuzuordnen. Dabei kann eine Messaufnehmerausführung mit Dehnungsmessstreifen auf der Innenbohrung des Innenteiles verwendet werden.

Zum Sensor wurde ein Messverfahren zur Schadensdetektion entwickelt, dass eine einfache Überwachung potentieller Schwachstellen im Bauwerk durch Vergleich von Spannungsmatrizen ermöglicht. Dabei werden die Messungen eines Detektionssensors, der Signale über vorhandene Schäden am Bauwerk liefert, und die Messungen eines Referenzsensors, der eine Aussage über die Lastzustände am Bauwerk trifft, in ihrem Signalverhalten miteinander verglichen. Der Adaptionsort der beiden Sensoren ist so zu wählen, dass sich die lastabhängigen Ausgangssignale im schadenfreien Zustand nur um einen konstanten Faktor unterscheiden. Mittels einer Empfindlichkeitsanpassung werden die Signale an einem Messverstärker abgeglichen, so dass ihre Differenz gleich Null ist. Da Materialveränderungen in ihrer Anfangsphase nur lokale Auswirkungen haben, ist lediglich der defektnahe Sensor in seiner Spannungsmatrix betroffen. Die lastabhängige Signaländerung verändert sich und es kommt zu einem endlichen Differenzsignal zwischen den Sensoren. Die geeignete Platzierung kann durch eine Finite-Elemente-Methode-Analyse (FEM-Analyse) bestimmt werden. Es ist aber auch möglich, die Erfahrungswerte aus solchen Analysen allgemeingültig in einem Tabellenwerk für verschiedene Schwachstellen zu formulieren. Das Messverfahren kann durch Einbau weiterer Referenzsensoren erweitert werden, so dass Lastort und Lastgröße bestimmt werden. Aus der Kombination von Lastgröße und Lastort kann ein Signal für einen von mehreren möglichen Detektionssensoren errechnet werden.

Die Vorgehensweise beim Messverfahren gewährleistet, dass ein Sensorschaden nicht unentdeckt bleibt. Fällt ein Sensor aus, so ist die Signaldifferenz ungleich Null.

### Vorteile

Gegenüber den im Stand der Technik beschriebenen Methoden bietet der erfindungsgemäße Sensor folgende Vorteile:
Das Außenteil ermöglicht durch die mehrfache Schlitzung eine große Dehnung, so dass nur geringe Anforderungen an die Bohrung gestellt werden müssen, in die der Sensor eingesetzt wird. Dies führt zu einer schnellen und damit kostengünstigen Montage mit bautypischen Werkzeugen, ohne dass eine spezielle Ausbildung der Monteure notwendig ist.

Durch die eckige Bauweise erlaubt der erfindungsgemäße Sensor eine Anhebung des Messbereichs über die aus dem Verhältnis von tangentialer Haftkraft zu radialer Anpresskraft durch den Haftungskoeffizienten unter idealen Bedingungen bestimmte Grenze, bei Stahl also etwa bei einer Dehnung von 0,1 %. Eine materialbedingt endliche vertikale Anpresskraft führt zu einer um Haftungskoeffizienten geminderten übertragbaren tangentialen Messkraft. Diese darf an keiner Position auf der Bohrungsinnenfläche überschritten werden, da es sonst zu einer reibungsbedingten Hysterese kommt. Beim erfindungsgemäßen Sensor wird diese Einschränkung der flächigen Dehnungsübertragung durch axiale, stegförmige Kontakte vermieden. Zwischen diesen wird die Dehnung in Umfangsrichtung integriert und auf das mit Dehnungsmessstreifen applizierte Innenteil übertragen.

Durch eine optimale Dimensionierung kann die zur Haftung führende radiale Anpressung der Linienkontakte und die tangentiale Elastizität des Sensors in ein bestmögliches Verhältnis gesetzt werden, so dass z. B. innerhalb des elastischen Bereiches von Stahl als bautypischem Material,ein nahezu hysteresefreies, lineares Übertragungsverhalten ermittelt werden kann.

Durch mittige Aussparungen an den Linienkontakten des Außenteiles kann der erfindungsgemäße Sensor auf eine räumliche Mehrkomponentenmessung erweitert werden.

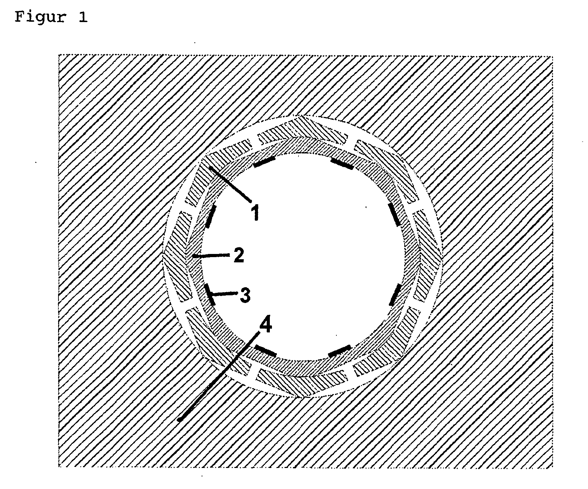

## Patentansprüche

1. Sensor zur Kraft- und Dehnungsmessung von festen Materialien, mit
a) einem in der Längsanordnung konischen Dehnungsübertragungskörper, hier als Innenteil bezeichnet, das in einem gleichartig konischen Verformungskörper, hier als Außenteil bezeichnet, durch eine Anzugskraft verspannt ist,
b) wobei das Außenteil mehrfach in axialer Richtung abwechselnd von der Vorder- und Rückseite geschlitzt ist,
c) und dass das Innenteil mit Messaufnehmern bestückt ist, **dadurch gekennzeichnet,**
**dass** das Außenteil mindestens dreieckig ausgeführt ist und die Bohrung des Messobjektes dadurch nur mit axialen linienartigen Kontaktstegen berührt,

2. Sensor nach Anspruch 1, **dadurch gekennzeichnet, dass** in dem Kontaktbereich von Innen- und Außenteil die Schlitze im Außenteil die Kontaktfläche ganz oder teilweise durchtrennen.

3. Sensor nach Anspruch 1 oder 2, **dadurch gekennzeichnet, dass** das Außenteil an seinen durch die Ecken gebildeten linienartigen Kontaktstegen zur Bohrung unterbrochen wird.

4. Verfahren zur Schadensdetektion, **dadurch gekennzeichnet, dass** ein erfindungsgemäßer Sensor nach Anspruch 1, 2 oder 3 im Zusammenhang mit weiteren Referenz- und Detektionssensoren eingesetzt wird und den Vergleich zwischen materialveränderungsbeeinflussten und nicht materialveränderungsbeeinflussten Punkten ermöglicht.

## Claims

1. Sensor for measuring force and strain in solid materials, having:
a) a strain transmission body, referred to here as the inner part, which is conical in the longitudinal configuration and is secured in a similarly conical deformation body, referred to here as the outer part, by a retaining force,
b) the outer part being slotted several times in the axial direction alternately from the front side and rear side,
c) and the inner part being equipped with measuring sensors, charaterized in that the outer part is at least triangular in form and thus touches the bore of the test object only with axial line-like contact ridges

2. Sensor according to Claim 1, **characterized in that**, in the contact zone of the inner part and the outer part, the slots in the outer part cut through the contact area completely or partly.

3. Sensor according to Claim 1 or 2, **characterized in that** the outer part is interrupted on its line-like ridges, formed by the corners, for contact with the bore.

4. Method for defect detection, **characterized in that** a sensor according to the invention according to Claim 1, 2 or 3 is used in connection with further reference sensors and detection sensors and makes possible comparison between points influenced by material change and points not influenced by material change.

## Revendications

1. Capteur pour mesurer les efforts et les allongements de matériaux solides, comprenant
a) un corps de transmission d'allongement, appelé ici partie intérieure, conique dans la disposition longitudinale, qui est mis sous contrainte par une force de serrage dans un corps de déformation ayant une conicité de même genre, appelé ici partie extérieure,
b) la partie extérieure étant fendue de façon multiple en direction axiale alternativement du côté avant et du côté arrière,
c) et la partie intérieure étant équipée de détecteurs de mesure, **caractérisé en ce que**
la partie extérieure est réalisée au moins triangulaire et l'alésage de l'objet de mesure n'est ainsi touché que par des arêtes de contact axiales du type lignes.

2. Capteur selon la revendication 1, **caractérisé en ce que** dans la région de contact des parties intérieure et extérieure, les fentes dans la partie extérieure entre-coupent partiellement ou totalement la surface de contact.

3. Capteur selon la revendication 1 ou 2, **caractérisé en ce que** la partie extérieure est interrompue en ses arêtes de contact du type lignes avec l'alésage, constituées par les angles.

4. Procédé pour la détection d'endommagement, **caractérisé en ce qu'**un capteur selon l'invention conforme à la revendication 1, 2 ou 3 est utilisé en relation avec d'autres capteurs de référence et de détection, et permet la comparaison entre des points influencés par des modifications de matériau et des points non-influencés par des modifications de matériau.
